# EUROPEAN PATENT APPLICATION

(11) **EP 4 773 056 A1**
(43) Date of publication of application: **08.07.2026**
(21) Application number: 24869421.8
(22) Date of filing: 24.12.2024
(51) Int. Cl.: G06Q 10/087, G06Q 10/0631

(54) **ORDER PROCESSING METHOD AND APPARATUS FOR ORDERING SYSTEM**

(30) Priority: 14.10.2024 CN 202411434514
(71) Applicant: Beijing Jingdong Yuansheng Technology Co., Ltd., Beijing 102600 (CN)
(72) Inventor: WEI, Yu, Beijing 102600 (CN)
(74) Representative: Mewburn Ellis LLP
(86) International application number: PCT/CN2024/141843
(87) International publication number: WO 2026/081346

(57) **Abstract**

The present disclosure discloses a method and apparatus for processing an order for an ordering system, and relates to the technical field of warehouse management. A specific embodiment of the method includes: generating target picking tasks based on aisles corresponding to shelves where items in a same order are located and a capacity of a picking container configured for each picking device; and selecting a target picking task corresponding to the picking container of a picking device in an idle state based on priorities of orders and assigning the target picking task to the picking device in the idle state. This embodiment achieves automated order processing.

## Description

### CROSS-REFERENCE TO RELATED APPLICATIONS

This patent application claims the priority to Chinese Patent Application No. 202411434514.8, filed on October 14, 2024 and entitled "Method and Apparatus for Processing Order for Ordering System," the disclosure of which is incorporated herein by reference in its entirety.

### TECHNICAL FIELD

The present disclosure relates to the field of computer technology, in particular to the technical field of warehouse management, and more particularly, to a method and apparatus for processing an order for an ordering system.

### BACKGROUND

Currently, ultra-small items, represented by the category of contact lenses, are characterized by a high number of SKUs (Stock Keeping Units), shallow inventory depth per SKU, and a high proportion of long-tail goods.

In daily operations management, for these ultra-small items, tasks are typically assigned, and goods are picked, verified, and packed by on-site operational personnel. This method involves multiple steps, resulting in low efficiency, a high picking error rate, and is difficult to manage.

### SUMMARY

Embodiments of the present disclosure provide a method and apparatus for processing an order for an ordering system, a device and a storage medium.

According to a first aspect, an embodiment of the present disclosure provides a method for processing an order for an ordering system, the method including: generating target picking tasks based on aisles corresponding to shelves where items in a same order are located and a capacity of a picking container configured for each picking device; and selecting a target picking task corresponding to the picking container of a picking device in an idle state based on priorities of orders and assigning the target picking task to the picking device in the idle state.

According to a second aspect, an embodiment of the present disclosure provides an apparatus for processing an order for an ordering system, the apparatus including: a generation module, configured to generate target picking tasks based on aisles corresponding to shelves where items in a same order are located and a capacity of a picking container configured for each picking device; and an assigning module, configured to select a target picking task corresponding to the picking container of a picking device in an idle state based on priorities of orders and assign the target picking task to the picking device in the idle state.

According to a third aspect, an embodiment of the present disclosure provides an electronic device. The electronic device includes: one or more processors; and a memory, storing one or more programs, where the one or more programs, when executed by the one or more processors, cause the one or more processors to implement the method for processing an order for an ordering system according to any one of the embodiments described in the first aspect.

According to a fourth aspect, an embodiment of the present disclosure provides a computer readable medium. The computer readable medium stores a computer program thereon, where the program, when executed by a processor, implements the method for processing an order for an ordering system according to any one of the embodiments described in the first aspect.

It should be understood that the content described in this section is not intended to identify key or important features of the embodiments of this disclosure, nor is it intended to limit the scope of this disclosure. Other features of this disclosure will become easily understandable through the following description.

### BRIEF DESCRIPTION OF THE DRAWINGS

FIG. 1 is an exemplary system architecture diagram to which the present disclosure may be applied;
FIG. 2 is a flowchart of an embodiment of a method for processing an order for an ordering system according to the present disclosure;
FIG. 3A is a flowchart of another embodiment of the method for processing an order for an ordering system according to the present disclosure;
FIG. 3B is a flowchart of yet another embodiment of the method for processing an order for an ordering system according to the present disclosure;
FIG. 4 is a schematic diagram of an application scenario of the method for processing an order for an ordering system according to the present disclosure;
FIG. 5 is a schematic diagram of an embodiment of an apparatus for processing an order for an ordering system according to the present disclosure; and
FIG. 6 is a schematic structural diagram of a computer system adapted for implementing a server of an embodiment of the present disclosure.

### DETAILED DESCRIPTION OF EMBODIMENTS

The exemplary embodiments of the present disclosure are described below with reference to the accompanying drawings, which include various details of the embodiments of the present disclosure to aid in understanding and should be considered as merely exemplary. Therefore, it should be recognized by those of ordinary skill in the art that various changes and modifications may be made to the described embodiments without departing from the scope and spirit of the present disclosure. Similarly, for clarity and conciseness, descriptions of well-known functions and structures are omitted in the following description.

It should be noted that the embodiments and features within the embodiments of this disclosure may be combined with each other on a non-conflict basis. The present disclosure will be described in detail below with reference to the drawings and in conjunction with the embodiments.

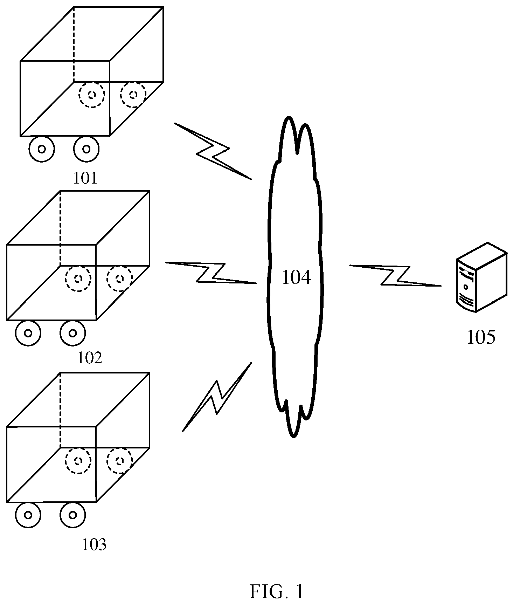

FIG. 1 shows an exemplary system architecture 100 to which an embodiment of a method for processing an order for an ordering system of the present disclosure may be applied.

As shown in FIG. 1, the system architecture 100 may include picking devices 101, 102 and 103, a network 104, and a control device 105. The network 104 is used to provide a communication link medium between the picking devices 101, 102 and 103 and the control device 105. The network 104 may include various types of connections, such as wired, wireless communication links, fiber cables, or the like.

The picking devices 101, 102 and 103 interacts with the control device 105 via the network 104 to receive or send messages, etc. The picking devices 101, 102 and 103 may receive target picking tasks assigned by the control device 105 and perform picking based on the received target picking tasks.

The picking devices 101, 102 and 103 may be any devices having picking functions, including but not limited to picking robots, and picking trolleys.

The control device 105 may be a server that provides various services, for example, generating target picking tasks based on aisles corresponding to shelves where items in a same order are located and a capacity of a picking container configured for each picking device; and selecting a target picking task corresponding to the picking container of a picking device in an idle state based on priorities of orders, and assigning the selected target picking task to the picking device in the idle state.

It should be noted that the method for processing an order for an ordering system provided in embodiments of the present disclosure is usually performed by the control device 105, and parts (such as units, sub-units, modules, or sub-modules) included in an apparatus for processing an order for an ordering system may all be provided in the control device 105.

It should be understood that the numbers of control devices, networks, and picking devices in FIG. 1 are only illustrative. According to implementation needs, there may be any number of control devices, networks, and picking devices.

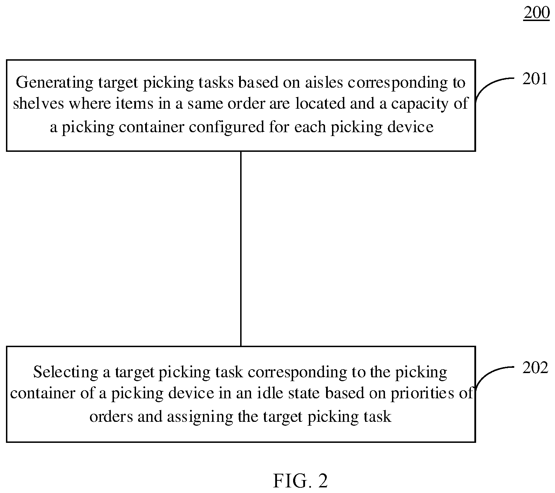

FIG. 2 shows a flow 200 of an embodiment of a method for processing an order for an ordering system that may be applied to the present disclosure. The ordering system may include a control device and picking devices. In the present embodiment, the method for processing an order for an ordering includes the following steps.

Step 201, generating target picking tasks based on aisles corresponding to shelves where items in a same order are located and a capacity of a picking container configured for each picking device.

In the present embodiment, after acquiring an order of to-be-generated picking tasks, an executing body (such as the control device 105 or shown in FIG. 1) may, for each order, first determine the shelves where the items are located, based on picking storage positions corresponding to the items in the order. Further, based on the shelves where the items are located, the executing body may determine the aisles corresponding to the shelves where the items in the order are located.

Further, the executing body may generate the target picking tasks corresponding to the order, based on the aisles corresponding to the shelves where the items in the order are located, and the capacity of the picking container configured for each picking device.

The picking device may operate and perform picking operations on the aisle corresponding to the shelf. The picking device may be any device having picking function, such as a trolley equipped with a robotic arm, or a robot equipped with a suction cup.

Here, the picking device may be configured with one or more picking containers. The capacity of the picking containers for the picking devices corresponding to the same aisle is usually the same, while the capacity of the picking containers for the picking devices corresponding to different aisles may be the same or different, which is not limited in the present disclosure. The picking containers may take various forms, such as carrying baskets, or boxes.

One picking container may correspond to one target picking task.

It should be noted that one aisle may correspond to one or more picking devices, and different aisles correspond to different picking devices.

In particular, the current order A includes item A and item B, both the item A and the item B are located on a shelf A. The aisle corresponding to shelf A is aisle 1. If a total volume of item A and item B is less than or equal to the capacity of the picking container, then one target picking task may be generated for order A. If the total volume of item A and item B is greater than the capacity of the picking container, then a specified number (for example, two, three, etc.) of target picking tasks may be generated for order A, where the specified number may be the minimum value that enables the volume of the items corresponding to the generated target picking tasks to be less than the capacity of the picking container.

In some optional implementations, the generating target picking tasks based on aisles corresponding to shelves where items in a same order are located and a capacity of a picking container configured for each picking device, includes: generating an initial picking task corresponding to each aisle based on the aisles corresponding to the shelves where the items in the same order are located; and splitting, in response to determining that a total volume of items corresponding to the initial picking task is greater than the capacity of the corresponding picking container, the initial picking task into multiple target picking tasks.

In this implementation, for each order, the executing body may determine whether the aisles corresponding to the items in the order are the same. If the aisles are not the same, the order is a merged order, that is, the items in the order correspond to multiple aisles. In this case, the executing body may generate an initial picking task corresponding to each aisle, based on the aisles corresponding to the items.

Further, the executing body may determine whether the total volume of the items corresponding to the initial picking task is greater than the capacity of the picking container for the picking device of the corresponding aisle. If yes, the initial picking task may be split into multiple target picking tasks; if not, the initial picking task may be directly determined as the target picking task.

Here, a total volume of items corresponding to the target picking task is less than the capacity of the picking container.

In particular, the current order A includes item A, item B, item C, and item D. Item A and item B are located on a shelf A, while item C and item D are located on a shelf B. The aisle corresponding to shelf A is aisle 1, and the aisle corresponding to shelf B is aisle 2. The executing body may generate two initial picking tasks corresponding to the aisles, based on the aisles corresponding to the items, such as initial picking task A (a picking task for item A and item B corresponding to aisle 1) and initial picking task B (a picking task for item C and item D corresponding to aisle 2). If the total volume of the items corresponding to initial picking task A is greater than the capacity of the picking container, then initial picking task A may be further split into multiple target picking tasks; and if the total volume of the items corresponding to initial picking task B is greater than the capacity of the picking container, then initial picking task B may be further split into multiple target picking tasks.

In this implementation, by generating the initial picking task corresponding to each aisle based on the aisles corresponding to the shelves where the items in the same order are located; and in response to determining that the total volume of the items corresponding to the initial picking task is greater than the capacity of the corresponding picking container, splitting the initial picking task into multiple target picking tasks, the splitting of picking tasks for orders in which order items are located in different aisles is achieved.

Step 202, selecting a target picking task corresponding to the picking container of a picking device in an idle state based on priorities of orders, and assigning the selected target picking task to the picking device in the idle state.

In the present embodiment, after generating the target picking tasks, the executing body may construct a task pool of target picking tasks based on the target picking tasks. Further, the executing body may select the target picking task corresponding to the picking container of the picking device in the idle state based on the priorities of the orders, and assign the selected target picking task to the picking device in the idle state.

All picking containers configured for the picking device in the idle state are empty.

Here, one picking container corresponds to one target picking task. The target picking tasks corresponding to different orders are different. Task types of the target picking tasks assigned to the same picking device may be the same or different, which is not limited in the present disclosure.

The priority of an order may be determined based on actual needs, such as order generation time, order type, or wave priority corresponding to the order, which is not limited in the present disclosure.

In particular, one aisle corresponds to one picking device. There are two orders, namely order 1 and order 2. Order 1 corresponds to 5 target picking tasks, where 3 target picking tasks correspond to aisle 1 and picking device A, and 2 target picking tasks correspond to aisle 2 and picking device B. Order 2 corresponds to 2 target picking tasks, both of which correspond to aisle 1 and picking device A. Both picking device A and picking device B have 5 picking containers, for example, carrying baskets. If picking device A is in an idle state, and the priority of order 1 is higher than the priority of order 2, then the 5 target picking tasks corresponding to order 1 may be assigned to picking device A for picking.

In some optional implementations, selecting a target picking task corresponding to the picking container of a picking device in an idle state based on priorities of orders and assigning the selected target picking task to the picking device in the idle state, includes: selecting the target picking task corresponding to the picking container of the picking device in the idle state based on the priority of a designated merged order and the priority of a non-designated merged order, and assigning the selected target picking task to the picking device in the idle state.

In this implementation, the number of the order may be multiple. If the multiple orders include the designated merged order and the non-designated merged order, the executing body may select the target picking task corresponding to the picking container of the picking device in the idle state based on the priority of the designated merged order and the priority of the non-designated merged order, and assign the selected target picking task to the picking device in the idle state.

The priority of the designated merged order is higher than the priority of the non-designated merged order. The designated merged order is used to indicate a merged order where some of the corresponding target picking tasks have been assigned, and the target picking tasks corresponding to the merged order correspond to different aisles.

Here, the priority of the non-designated merged order may be determined based on such as the order type, order generation time, wave priority, and the like, that correspond to the order of the non-designated merged order.

In this implementation, by selecting the target picking task corresponding to the picking container of the picking device in the idle state based on the priority of the designated merged order and the priority of the non-designated merged order and assigning the selected target picking task to the picking device in the idle state, the order priority is flexibly set.

In some optional implementations, the priority of the non-designated merged order is determined based on a wave priority corresponding to the non-designated merged order.

In this implementation, the executing body may directly determine the wave priority corresponding to the non-designated merged order as the priority of the non-designated merged order.

One wave (which may also be referred to as "batch") may correspond to multiple orders, and the priority of the wave may be determined based on such as the order generation time, order type, picking priority and the like, of order items of the orders corresponding to the wave.

In particular, aisle 1 corresponds to picking device A, and aisle 2 corresponds to picking device B. There are three orders, namely order 1, order 2, and order 3. Order 1 corresponds to 5 target picking tasks, where 3 target picking tasks correspond to aisle 1 and picking device A, and 2 target picking tasks correspond to aisle 2 and picking device B. Order 2 corresponds to 2 target picking tasks, both of which correspond to aisle 1. Order 3 corresponds to 2 target picking tasks, both of which correspond to aisle 1.

For aisle 1, if the 2 target picking tasks corresponding to aisle 2 in the target picking tasks corresponding to order 1 have been assigned, and the target picking tasks corresponding to order 2 and order 3 have not been assigned, then order 1 is considered as the designated merged order, and order 2 and order 3 are the non-designated merged orders, the priority of order 1 is higher than the priorities of order 2 and order 3.

For order 2 and order 3, the wave priority corresponding to order 2 is higher than the wave priority of order 3, therefore, the priorities of order 1, order 2, and order 3 decrease in sequence.

If picking device A is in an idle state and has 5 picking containers, the 3 target picking tasks corresponding to aisle 1 in order 1 and the 2 target picking tasks in order 2 may be prioritized and assigned to picking device A.

In this implementation, by determining the priority of the non-designated merged order based on the wave priority corresponding to the non-designated merged order, flexible setting of the order priority is further improved.

In some optional implementations, the method further includes: modifying, in response to determining that the picking device has received the target picking task, a state of the picking device from the idle state to a picking state; and determining, in response to determining that a target picking device exists among picking devices in the picking state, a designated picking task corresponding to an empty picking container among unassigned target picking tasks, and assigning the designated picking task to the target picking device.

In this implementation, the executing body may detect whether the picking device has received the corresponding target picking task in real time or periodically, and if yes, the executing body modify the state of the picking device from the idle state to the picking state.

Further, if it is determined that there is a target picking device among picking devices in picking states, the executing body may determine the designated picking task corresponding to the empty picking container among the unassigned target picking tasks, and assign the designated picking task to the target picking device.

Here, the picking state may include: a in-picking state, and the in-picking state may include a process in which the picking device receives the target picking task and performs picking based on the received target picking task. Further, the picking state may further include a locked state, and the locked state may include a process in which the picking device transports a picked item to a merging station after picking based on the target picking task.

An empty picking container exists among the picking containers configured for the target picking device, and the designated picking task is of the same task type as the target picking task that has been assigned to the target picking device.

Here, the task type of the target picking task is the same as the task type of the order corresponding to the target picking task.

There may be various task types, including, for example, outbound tasks, transfer tasks, inventory tasks, etc.

Here, the above tasks may be further classified as customer order tasks and non-customer order tasks.

In this implementation, by modifying, in response to determining that the picking device in the idle state has received the target picking task, the state of the picking device in the idle state from the idle state to the picking state; and determining, in response to determining that a target picking device exists among picking devices in picking states, the designated picking task corresponding to the empty picking container among the unassigned target picking tasks, and assigning the designated picking task to the target picking device, thus state management of the picking device is achieved, and tasks may be added based on the state of the picking task.

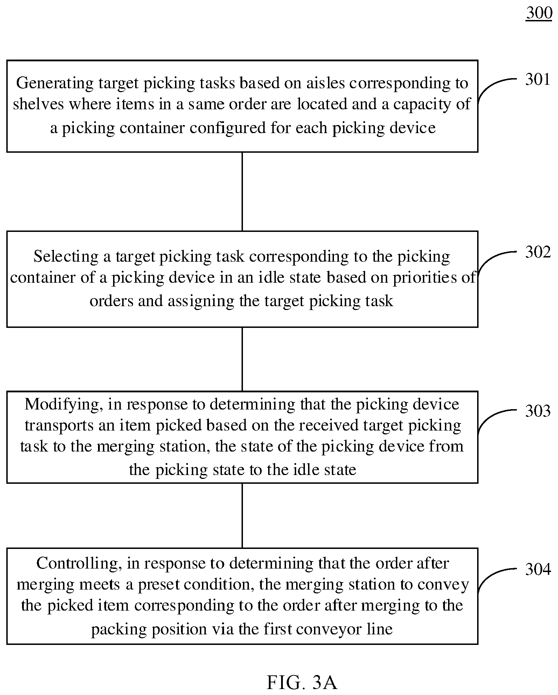

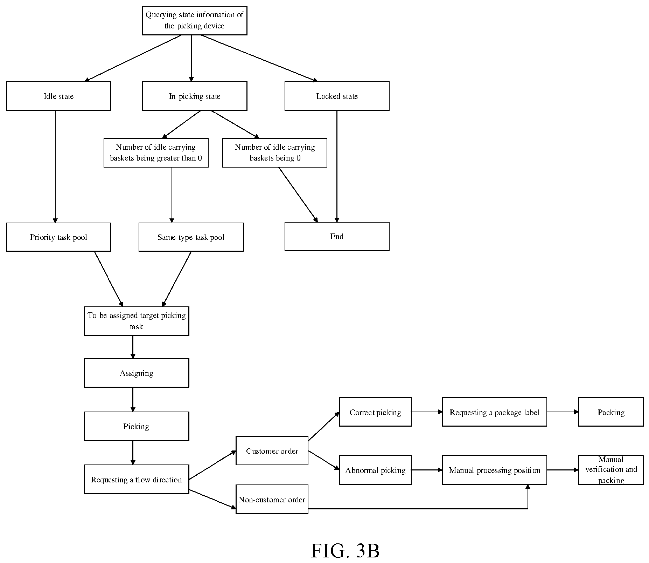

FIG. 3 shows a flow 300 of an embodiment of the method for processing an order for an ordering system that may be applied to the present disclosure. The ordering system may further include a merging station, a packing position and a first conveyor line, and the first conveyor line connects the merging station and the packing position. In the present embodiment, the method for processing an order for an ordering system includes the following steps.

Step 301, generating target picking tasks based on aisles corresponding to shelves where items in a same order are located and a capacity of a picking container configured for each picking device.

In the present embodiment, for implementation details and technical effects of step 301, reference may be made to the description of step 201, and detailed description thereof will be omitted.

Step 302, selecting a target picking task corresponding to the picking container of a picking device in an idle state based on priorities of orders, and assigning the selected target picking task to the picking device in the idle state.

In the present embodiment, for implementation details and technical effects of step 302, reference may be made to the description of step 202, and detailed description thereof will be omitted.

Step 303, modifying, in response to determining that the picking device in the picking state transports an item picked based on the received target picking task to the merging station, the state of the picking device in the picking state from the picking state to the idle state.

In the present embodiment, the executing body may select a to-be-assigned target picking task corresponding to the picking container of the picking device in the idle state based on the priorities of the orders, and assign the to-be-assigned target picking task to the picking device in the idle state.

After receiving the corresponding target picking task, the picking device may execute the received target picking task, that is, pick the item corresponding to the target picking task, and transport the picked item to the merging station after the picking.

The merging station is used to merge picked items corresponding to the same order.

The executing body may detect whether the picking device has transported the picked item to the merging station in real time or periodically, and if yes, the executing body may modify the state of the picking device from the picking state to the idle state.

Step 304, controlling, in response to determining that the order after merging meets a preset condition, the merging station to convey the picked item corresponding to the order after merging to the packing position via the first conveyor line.

In the present embodiment, the executing body may determine whether the order after merging meets the preset condition via the merging station, and if yes, the executing body may control the merging station to convey the picked item corresponding to the order after merging to the packing position via the first conveyor line for packing.

The preset condition may be set based on experience and actual needs, such as the picked item corresponding to the order after merging matching an actual required item in the order, the order after merging being a customer order, or the order after merging being a customer order and the picked item corresponding to the order after merging matching an actual required item in the order.

Here, the first conveyor line may be a conveyor track having any structure, such as a strip-shaped track, an arc-shaped track, or a spiral track.

In some optional implementations, the method further includes: controlling, in response to determining that the order after merging does not meet the preset condition, the merging station to convey the picked item corresponding to the order after merging to a manual processing position via a second conveyor line.

In this implementation, the ordering system may further include the manual processing position and the second conveyor line, and the second conveyor line connects the merging station and the manual processing position. The executing body may determine whether the order after merging meets the preset condition via the merging station, and if not, for example, the picked item corresponding to the order after merging does not match an actual required item in the order, i.e., there is a shortage or excess of goods, the executing body may control the merging station to convey the picked item corresponding to the order after merging to the manual processing position via the second conveyor line for manual processing.

Here, the second conveyor line may be a conveyor track having any structure, such as a strip-shaped track, an arc-shaped track, or a spiral track.

In particular, as shown in FIG. 3B, aisle 1 corresponds to picking device A, and aisle 2 corresponds to picking device B. Both picking device A and picking device B have 5 picking containers, such as carrying baskets. There are 3 orders, namely order 1, order 2, and order 3, where the priorities of order 1, order 2, and order 3 decrease in sequence. Order 1 corresponds to 3 target picking tasks, where 2 target picking tasks correspond to aisle 1 and picking device A, and 1 target picking task corresponds to aisle 2 and picking device B. Order 2 corresponds to 3 target picking tasks, all of which correspond to aisle 1. Order 3 corresponds to 2 target picking tasks, both of which correspond to aisle 2. The target picking tasks corresponding to each order may be stored in a priority task pool.

The executing body may first query state information of the picking device, for example, for aisle 1, the executing body may query the state information of the picking device corresponding to aisle 1, and if picking device A is in an idle state, the executing body may select a to-be-assigned target picking task from the priority task pool according to a preset algorithm. For example, the executing body may directly determine the to-be-assigned target picking task based on the priorities of the orders, that is, assigning 2 unassigned target picking tasks corresponding to aisle 1 in order 1 and 3 unassigned target picking tasks corresponding to aisle 1 in order 2 to picking device A.

In response to determining that picking device A has received the assigned target picking tasks, the state of picking device A may be modified from the idle state to an in-picking state. After receiving the target picking tasks, the picking device may perform picking operations.

Further, if there is an empty carrying basket (such as 0 picking) in picking device A, that is, the number of idle carrying baskets is greater than 0, that is, picking device A is the target picking device, in the same-type task pool composed of unassigned target picking tasks with the same task type as the target picking tasks corresponding to picking device A, the to-be-assigned target picking task, i.e., a designated picking task, corresponding to the empty carrying basket may be determined by using the preset algorithm, and the designated picking task is then assigned to the target picking device.

If there is no empty carrying basket in picking device A, that is, the number of idle carrying baskets is 0, the flow may be directly ended.

Here, during picking device A completing the picking and on its way to the merging station, the state of picking device A may be set to "locked".

Further, the picking device may transport the item picked based on the received target picking task to the merging station for merging. For each order after merging, the merging station may request a flow direction from the executing body. In response to receiving the flow direction request, the executing body may first determine whether the order is a customer order, and if yes, the executing body may further determine whether the picked item corresponding to the order matches an item in the order (i.e., an actual required item). If they match, indicating that the picking is correct, the executing body may request a package label and control the merging station to convey the picked item corresponding to the order to the packing position via the first conveyor line for packing. If they do not match, indicating that there is an abnormal picking situation, the executing body may control the merging station to convey the picked item corresponding to the order to the manual processing position via the second conveyor line for manual verification and packing.

If no, that is, the order is a non-customer order, the executing body may control the merging station to convey the picked item corresponding to the order to the manual processing position via the second conveyor line for manual verification and packing.

In this implementation, by controlling, in response to determining that the order after merging does not meet the preset condition, the merging station to convey the picked item corresponding to the order after merging to the manual processing position via the second conveyor line, automated processing of order items that do not meet the requirements is achieved.

As can be seen from FIG. 3A, compared with the embodiment corresponding to FIG. 2, the flow 300 of the method for processing an order for an ordering system in the present embodiment reflects that in response to determining that the picking device transports the item picked based on the received target picking task to the merging station, the state of the picking device is modified from the picking state to the idle state, and in response to determining that the order after merging meets the preset condition, the merging station is controlled to convey the picked item corresponding to the order after merging to the packing position via the first conveyor line, therefore, automated processing of order items that meet the requirements is achieved.

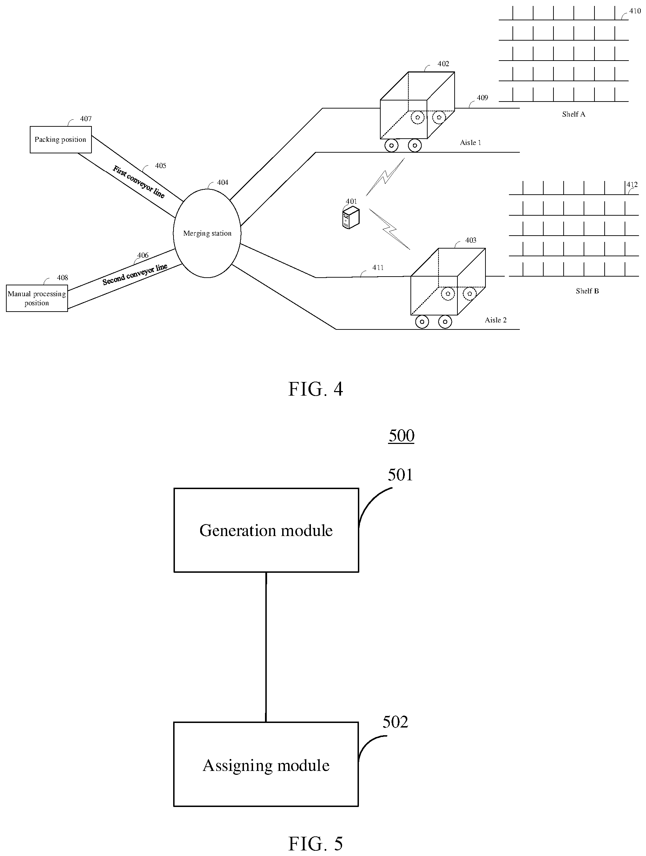

With further reference to FIG. 4, FIG. 4 is a schematic diagram of an application scenario of the method for processing an order for an ordering system according to the present embodiment.

In the application scenario of FIG. 4, the ordering system includes a control device 401, picking devices 402 and 403, a merging station 404, a first conveyor line 405, a second conveyor line 406, a packing position 407, and a manual processing position 408. The picking device 402 (such as picking device A) corresponds to aisle 409 and shelf 410 (such as aisle 1 and shelf A), while the picking device 403 (such as picking device B) corresponds to aisle 411 and shelf 412 (such as aisle 2 and shelf B). Both picking device A and picking device B have 3 picking containers, for example, carrying baskets. There are 2 orders, namely order 1 and order 2, where the priority of order 1 is higher than the priority of order 2. Order 1 corresponds to 3 target picking tasks, where 2 target picking tasks correspond to aisle 1 and picking device A, and 1 target picking task corresponds to aisle 2 and picking device B. Order 2 corresponds to 3 target picking tasks, all of which correspond to aisle 1. The target picking tasks corresponding to each order may be stored in a priority task pool.

For aisle 1, if picking device A is in an idle state, the executing body may select a to-be-assigned target picking task from the priority task pool according to a preset algorithm. For example, the executing body may determine the to-be-assigned target picking task based on the priorities of the orders, that is, assigning 2 unassigned target picking tasks corresponding to aisle 1 in order 1 and 1 unassigned target picking task corresponding to aisle 1 in order 2 to picking device A. Picking device A receives the target picking tasks and performs picking operations, that is, picking items corresponding to the target picking tasks and transporting the picked items to the merging station 404 for merging.

For each order after merging in the merging station 404, the executing body may first determine whether the items corresponding to the order match required items corresponding to the order. If they match, indicating that the picking is correct, the executing body may request a package label and control the merging station 404 to convey the picked items corresponding to the order to the packing position 407 via the first conveyor line 405 for packing. If they do not match, indicating that there is an abnormal picking situation, the executing body may control the merging station 404 to convey the picked items corresponding to the order to the manual processing position 408 via the second conveyor line 406 for manual verification and packing.

In the present disclosure, the target picking tasks are generated based on the aisles corresponding to the shelves where the items in the same order are located and the capacity of the picking container configured for each picking device; and the target picking task corresponding to the picking container of the picking device in the idle state is selected based on the priorities of the orders and the target picking task is assigned to the picking device in the idle state, so that the ordering system may automatically select orders, split orders, and assign executable tasks to picking devices, thereby achieving automated order processing.

With further reference to FIG. 5, as an implementation of the method shown in the above figures, the present disclosure provides an embodiment of an apparatus for processing an order for an ordering system, and the apparatus embodiment corresponds to the method embodiment as shown in FIG. 2, and the apparatus may be applied to various electronic devices.

As shown in FIG. 5, an apparatus 500 for processing an order for an ordering system in the present embodiment includes: a generation module 501 and an assigning module 502.

The generation module 501 may be configured to generate target picking tasks based on aisles corresponding to shelves where items in a same order are located and a capacity of a picking container configured for each picking device.

The assigning module 502 may be configured to select a target picking task corresponding to the picking container of a picking device in an idle state based on priorities of orders, and assign the selected target picking task to the picking device in the idle state.

In some optional implementations of the present embodiment, the generation module 501 is further configured to: generate an initial picking task corresponding to each aisle based on the aisles corresponding to the shelves where the items in the same order are located; and split, in response to determining that a total volume of items corresponding to the initial picking task is greater than the capacity of the corresponding picking container, the initial picking task into multiple target picking tasks.

In some optional implementations of the present embodiment, the assigning module is further configured to: select the target picking task corresponding to the picking container of the picking device in the idle state based on a priority of a designated merged order and a priority of a non-designated merged order, and assign the selected target picking task to the picking device in the idle state.

In some optional implementations of the present embodiment, the priority of the non-designated merged order is determined based on a wave priority corresponding to the non-designated merged order.

In some optional implementations of the present embodiment, the apparatus further includes an adding module, and the adding module is configured to: modify, in response to determining that the picking device in the idle state has received the target picking task, a state of the picking device in the idle state from the idle state to a picking state; and determine, in response to determining a target picking device exists among picking devices in picking states, a designated picking task corresponding to an empty picking container among unassigned target picking tasks, and assign the designated picking task to the target picking device.

In some optional implementations of the present embodiment, the apparatus further includes a packing module, and the packing module is configured to: modify, in response to determining that the picking device in the picking state transports an item picked based on the received target picking task to the merging station, the state of the picking device in the picking state from the picking state to the idle state; and control, in response to determining that the order after merging meets a preset condition, the merging station to convey the picked item corresponding to the order after merging to the packing position via the first conveyor line.

In some optional implementations of the present embodiment, the apparatus further includes a processing module, and the processing module is configured to: control, in response to determining that the order after merging does not meet the preset condition, the merging station to convey the picked item corresponding to the order after merging to the manual processing position via the second conveyor line.

It should be noted that the gathering, collection, update, analysis, processing, usage, transmission, and storage of the users' personal information involved in the technical solution of the present disclosure comply with the provisions of relevant laws and regulations, are used for lawful purposes, and do not violate public order and good customs. Necessary measures are employed for users' personal information to prevent illegal access to users' personal information and data, and maintain the security of users' personal information, network security, and national security.

According to an embodiment of the present disclosure, the present disclosure further provides an electronic device and a readable storage medium.

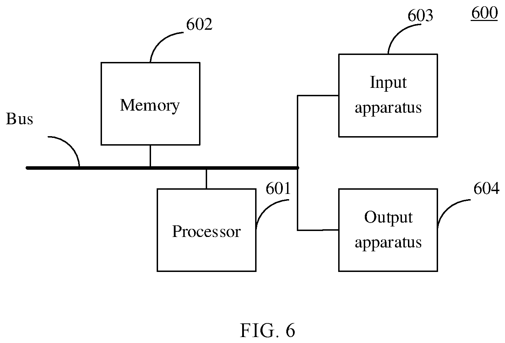

As shown in FIG. 6, is a block diagram of an electronic device of the method for processing an order for an ordering system according to an embodiment of the present disclosure.

600 is a block diagram of an electronic device of a method for processing an order for an ordering system according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided in the present disclosure. The memory stores instructions executable by at least one processor, enable the at least one processor to perform the method for processing an order for an ordering system provided by the present disclosure. The non- transitory computer readable storage medium of the present disclosure stores computer instructions that are used to enable the computer to perform the method for processing an order for an ordering system provided by the present disclosure.

The memory 602, as a non- transitory computer readable storage medium, may be used to store non-instantaneous software programs, non- transitory computer-executable programs and modules, such as program instructions/modules corresponding to the method for processing an order for an ordering system in embodiments of the present disclosure (e.g., the generation module 501 and the assigning module 502 shown in FIG. 5). The processor 601 performs various functional applications and data processing of the server by running the non-instantaneous software programs, instructions and modules stored in the memory 602, i.e., implements the method for processing an order for an ordering system in the above method embodiment.

The memory 602 may include a storage program area and a storage data area, where the storage program area may store an operating system and at least one function required application program; and the storage data area may store data created by the use of the electronic device according to the method for processing an order for an ordering system, etc. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for processing an order for an ordering system through a network. Examples of the above network include but are not limited to the Internet, intranet, local area network, mobile communication network, and combinations thereof.

The electronic device of the method for processing an order for an ordering system may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the method for processing an order for an ordering system, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution of embodiments of the present disclosure, automated order processing is achieved.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for processing an order for an ordering system, the ordering system comprising: a control device and picking devices, and the method being applied to the control device, comprising:
generating target picking tasks based on aisles corresponding to shelves where items in a same order are located and a capacity of a picking container configured for each picking device, wherein different aisles correspond to different picking devices; and
selecting a target picking task corresponding to the picking container of a picking device in an idle state based on priorities of orders and assigning the target picking task to the picking device in the idle state, wherein the picking container configured for the picking device in the idle state is empty, and one picking container corresponds to one target picking task.

2. The method according to claim 1, wherein generating the target picking tasks based on the aisles corresponding to the shelves where the items in the same order are located and the capacity of the picking container configured for each picking device, comprises:
generating an initial picking task corresponding to each aisle based on the aisles corresponding to the shelves where the items in the same order are located, wherein a number of the aisles is multiple; and
splitting, in response to determining that a total volume of items corresponding to the initial picking task is greater than the capacity of the corresponding picking container, the initial picking task into multiple target picking tasks, wherein a total volume of items corresponding to the target picking task is less than the capacity of the picking container.

3. The method according to claim 1, wherein selecting the target picking task corresponding to the picking container of the picking device in the idle state based on the priorities of orders and assigning the target picking task to the picking device in the idle state, comprises:
selecting the target picking task corresponding to the picking container of the picking device in the idle state based on a priority of a designated merged order and a priority of a non-designated merged order, and assigning the target picking task to the picking device in the idle state, wherein the designated merged order is used to indicate a merged order where some of the corresponding target picking tasks have been assigned, the target picking tasks corresponding to the merged order correspond to different aisles, and the priority of the designated merged order is higher than the priority of the non-designated merged order.

4. The method according to claim 3, wherein the priority of the non-designated merged order is determined based on a wave priority corresponding to the non-designated merged order.

5. The method according to claim 1, wherein the method further comprises:
modifying, in response to determining that the picking device in the idle state has received the target picking task, a state of the picking device in the idle state from the idle state to a picking state; and
determining, in response to determining a target picking device exists among picking devices in picking states, a designated picking task corresponding to an empty picking container among unassigned target picking tasks, and assigning the designated picking task to the target picking device, wherein the empty picking container is among picking containers configured for the target picking device, and the designated picking task is of a same task type as the target picking task that has been assigned to the target picking device.

6. The method according to claim 5, wherein the ordering system further comprises: a merging station, a packing position and a first conveyor line, wherein the first conveyor line connects the merging station and the packing position, the merging station is used to merge picked items corresponding to the same order, and the method further comprises:
modifying, in response to determining that the picking device in the picking state transports an item picked based on the received target picking task to the merging station, the state of the picking device in the picking state from the picking state to the idle state; and
controlling, in response to determining that the order after merging meets a preset condition, the merging station to convey the picked item corresponding to the order after merging to the packing position via the first conveyor line.

7. The method according to claim 6, wherein the ordering system further comprises: a manual processing position and a second conveyor line, wherein the second conveyor line connects the merging station and the manual processing position, and the method further comprises:
controlling, in response to determining that the order after merging does not meet the preset condition, the merging station to convey the picked item corresponding to the order after merging to the manual processing position via the second conveyor line.

8. An apparatus for processing an order for an ordering system, the ordering system comprising: a control device and picking devices, and the apparatus being provided in the control device, the apparatus comprising:
a generation module, configured to generate target picking tasks based on aisles corresponding to shelves where items in a same order are located and a capacity of a picking container configured for each picking device, wherein different aisles correspond to different picking devices; and
an assigning module, configured to select a target picking task corresponding to the picking container of a picking device in an idle state based on priorities of orders and assign the target picking task to the picking device in the idle state, wherein the picking container configured for the picking device in the idle state is empty, and one picking container corresponds to one target picking task.

9. An electronic device, comprising:
at least one processor; and
a memory, communicatively connected to the at least one processor;
wherein the memory stores instructions executable by the at least one processor, and the instructions when executed by the at least one processor, cause the at least one processor to perform the method according to any one of claims 1-7.

10. A non-transitory computer readable storage medium, storing a computer instruction, wherein the computer instruction is used to cause a computer to perform the method according to any one of claims 1-7.

11. A computer program product, comprising a computer program, wherein the computer program, when executed by a processor, implements the method according to any one of claims 1-7.
